# EUROPÄISCHE PATENTSCHRIFT

(11) **EP 3 567 294 B1**
(45) Veröffentlichungstag und Bekanntmachung des Hinweises auf die Patenterteilung: **24.11.2021**
(21) Anmeldenummer: 19173096.9
(22) Anmeldetag: 07.05.2019
(51) Int. Cl.: F16L 51/02

(54) **BEWEGLICHES BAUTEIL AUS METALL**
MOVABLE PART MADE OF METAL
COMPOSANT MOBILE MÉTALLIQUE

(30) Priorität: 08.05.2018 DE 102018111023; 08.05.2018 DE 102018111019; 08.05.2018 DE 102018111024
(43) Veröffentlichungstag der Anmeldung: 13.11.2019
(73) Patentinhaber: Witzenmann GmbH, 75175 Pforzheim (DE)
(72) Erfinder: Kämpfe, Andreas, 75173 Pforzheim (DE); Kunkis, Marius, 76185 Karlsruhe (DE); Marx, Michael, 75031 Eppingen (DE); Poschmann, Markus, 76135 Karlsruhe (DE); Rothfuß, Daniel, 75334 Straubenhardt (DE); Seckner, Marc, 76149 Karlsruhe (DE); Weber, Matthias, 75015 Bretten (DE)
(74) Vertreter: Lemcke, Brommer & Partner Patentanwälte Partnerschaft mbB

(56) Entgegenhaltungen:
- WO-A1-2014/204765
- DE-A1-102005 041 671
- DE-A1-102012 102 506
- DE-A1-102014 110 947
- DE-T2- 69 128 620
- DE-U1- 20 103 434
- US-A1- 2016 243 648

## Beschreibung

Die Erfindung betrifft ein bewegliches Bauteil aus Metall zum Ausgleich bzw. zum Aufnehmen von In-Sich-Bewegungen einer Leitung für Fluide, insbesondere einer fluidführenden Rohrleitung nach dem Oberbegriff des Patentanspruchs 1. Dieses bewegliche Bauteil ist insbesondere längenveränderlich und/oder angular und/oder axial und/oder lateral beweglich.

Leitungen für Fluide, insbesondere fluidführende Rohrleitungen und insbesondere in einer verfahrenstechnischen Industrieanlage, können meist nicht völlig starr verlegt werden, da sie im Betrieb regelmäßig In-Sich-Bewegungen ausführen. Dies können Längenänderungen aufgrund von Wärmeausdehnungseffekten sein, wenn Fluide mit unterschiedlichen Temperaturen durchgeleitet werden; es kann sich daneben auch um Druckpulse im durchgeleiteten Fluid handeln, oder es treten Vibrationen und sonstige Schwingungen innerhalb der Leitung auf, und dergleichen mehr. Daher ist es notwendig, bewegliche Bauteile der vorliegenden Art zu verwenden, und zwar insbesondere entweder als längenveränderliche und/oder angular bewegliche Aufhängung oder Stütze für die fluidführende Leitung, oder als flexibles Leitungselement zum Einbau in die fluidführende Leitung.

Flexible Leitungselemente eignen sich insbesondere zum Ausgleichen von Wärmeausdehnungseffekten innerhalb der fluidführenden Leitung sowie auch zum Ausgleich von Montagetoleranzen, von angularen Bewegungen aufgrund von Druckstößen, zur Aufnahme von Schwingungen und dergleichen mehr. Bewegliche Aufhängungen oder Stützen für die fluidführende Leitung sorgen hingegen dafür, dass Axial-, Lateral- oder Angularbewegungen der Leitung in gewissen Grenzen möglich sind, um beispielsweise Wärmeausdehnungseffekte zu kompensieren. Bewegliche Aufhängungen oder Stützen sorgen insbesondere auch dafür, dass Schwingungen, beispielsweise aufgrund von Druckpulsen im durchgeleiteten Fluid, oder Vibrationen nicht zu einer Beschädigung der Befestigungspunkte der fluidführenden Leitung führen. Bewegliche Aufhängungen und bewegliche Stützen bestehen oft aus einer federnden Kolben-Zylinder-Einheit mit Gasfeder und/oder Torsionsfeder, während flexible Leitungselemente meist aus einem Metallrohr gebildet werden, das mindestens einen ringgewellten oder wendelförmig gewellten Abschnitt aufweist.

Bewegliche Bauteile der vorliegenden Art sind oft sicherheitsrelevant, da in fluidführenden Rohrleitungen, insbesondere in verfahrenstechnischen Industrieanlagen, oft gesundheitsgefährliche oder umweltgefährliche Stoffe transportiert werden, und dies möglicherweise unter hohen bzw. sehr tiefen Temperaturen und hohen Drücken. Es ist daher notwendig, die wichtigsten Betriebszustände der vorliegenden beweglichen Bauteile zu überwachen bzw. regelmäßig zu inspizieren. Hierfür ist es insbesondere bekannt, am beweglichen Bauteil, bei-spielsweise an einer angular beweglichen Aufhängung, eine Messvorrichtung für einen momentanen Wert eines Zustandsparameters des momentanen Betriebszustands des beweglichen Bauteils anzubringen. Bei der angular beweglichen Aufhängung ist ein wichtiger Betriebszustand die momentane angulare Auslenkung; bei einer längenveränderlichen beweglichen Aufhängung ist ein wichtiger momentaner Betriebszustand die axiale Verschiebung. Der entsprechende Zustandsparameter ist demnach ein Auslenkungswinkel bzw. eine axiale Verschiebestrecke, und diese beiden Zustandsparameter werden mit zwei gegeneinander beweglichen Skalen, oder einem Zeiger und einer Skala, gemessen und angezeigt. Es ist daher jederzeit von außen ablesbar, welchen Wert der Zustandsparameter "axiale Verschiebung" bzw. "Auslenkungswinkel" momentan aufweist.

Das Dokument US 2016/0243648 A1 befasst sich mit dem Problem, eine flexible Schlauchleitung mit Informationen zu versehen, die den konkreten Aufbau, das Herstelldatum und weitere für die Funktion und Lebensdauer der Schlauchleitung relevante Daten enthalten. Hierfür wird vorgeschlagen, in die äußere Umhüllung der Schlauchleitung einen QR-Code , also ein digitalauslesbares Informationselement einzugravieren.

Problematisch ist nun, dass bei einer regelmäßigen Inspektion, insbesondere wenn das bewegliche Bauteil in einer verfahrenstechnischen Industrieanlage verbaut ist, in der sich in der Regel eine Vielzahl von beweglichen Bauteilen mit unterschiedlichen Bauformen und Spezifikationen befinden, eine direkte Einordnung der abgelesenen Messergebnisse oft nicht oder nur mit großem Aufwand und großer Sorgfalt möglich ist. Denn wenn dem Bauteil nicht angesehen werden kann, welche technischen Eigenschaften es im Einzelnen hat, ist vor Ort nicht zu erkennen, ob ein abgelesener Messwert für dieses Bauteil etwa kritisch ist oder noch innerhalb der zulässigen Wertbereiche liegt. Wenn es sich um sicherheitsrelevante Bauteile handelt, kommt als Problematik hinzu, dass Inspektionsintervalle zu lang sein können, oder dass bei turnusmäßigen Inspektionen das ein oder andere bewegliche Bauteil vergessen wird.

Der vorliegenden Erfindung liegt daher die Aufgabe zugrunde, ein bewegliches Bauteil der eingangs genannten Art solcherart zu modifizieren, dass es bei einer Inspektion leichter erkannt werden kann und seine bei der Inspektion festgestellten Betriebszustände leichter eingeordnet werden können bzw. um es hinsichtlich der Überwachung von Betriebszuständen zu verbessern.

Gelöst ist diese Aufgabe durch ein bewegliches Bauteil mit den Merkmalen des Patentanspruchs 1. Bevorzugte Ausgestaltungen und Weiterbildungen des erfindungsgemäßen beweglichen Bauteils sind in den Patentansprüchen 2 bis 14 niedergelegt.

Ein erfindungsgemäßes bewegliches Bauteil aus Metall zum Ausgleichen bzw. Aufnehmen von In-Sich-Bewegungen einer Leitung für Fluide, das insbesondere längenveränderlich und/oder angular und/oder axial und/oder lateral beweglich ist, wird erfindungsgemäß also dadurch modifiziert, dass am beweglichen Bauteil ein digital auslesbares Informationselement angebracht ist. Dieses könnte man als "digitales Typenschild" bezeichnen, da es im einfachsten Fall tatsächlich die Funktion eines Typenschilds übernimmt, nämlich Informationen über das damit versehene bewegliche Bauteil digital auslesbar zur Verfügung zu stellen.

Es kann im Rahmen der vorliegenden Erfindung auch vorgesehen sein, dass das digital auslesbare Informationselement einen auslesbaren Code enthält, mit dem Zusatzinformationen von einem Webserver angefordert werden können. Dieser Code ist im einfachsten Fall eine Internetadresse, über die die gewünschten Informationen abrufbar sind; wenn der Code über eine App verarbeitet wird, können die Informationen bereits an das spezifische Bauteil angepasst sein. Im Code können auch Zugangskennungen enthalten sein, mit denen die spezifischen Informationen von einem Webserver abgerufen werden können, in dem die Informationen geschützt abgelegt sind.

Bevorzugterweise wird das erfindungsgemäße bewegliche Bauteil mit einer über das Internet oder eine sonstige Netzverbindung kontaktierbaren Plattform oder einer Datenbank, beispielsweise innerhalb einer Cloud-Plattform, kombiniert, so dass man das erfindungsgemäße, digital auslesbare Informationselement mit einem mobilen Endgerät, wie einem Smartphone, einer digitalen Kamera, einem Tablet-Computer und dergleichen, einlesen und mit Hilfe der eingelesenen Informationen weitere Informationen aus entsprechenden Datenbanken beschaffen kann. Vorzugsweise werden die beschafften weiteren Informationen mittels grafischer Darstellungen aufgearbeitet, so dass auf den ersten Blick erkannt werden kann, ob sich das inspizierte bewegliche Bauteil noch im Rahmen der vorgegebenen Betriebsparameter befindet.

Ein digital auslesbares Informationselement kann auch viele der interessierenden Informationen direkt beinhalten, so dass die vorliegende Erfindung die oben genannten Vorteile auch dann aufweist, wenn kein ergänzender Kontakt mit entsprechenden Datenbanken vorgesehen ist.

Das auslesbare Informationselement ist mit einem von außen auslesbaren digitalen Speicher versehen. Dieser ist ein elektronischer Datenspeicher, der mittels Nahfeldkommunikation auslesbar ist, oder ein elektronischer Datenspeicher, der mittels sonstiger elektromagnetischer Kommunikation passiv auslesbar ist, wie insbesondere ein RFID-Chip.

Das Einbinden eines erfindungsgemäßen beweglichen Bauteils mit einem digital auslesbaren Informationselement in ein Informationssystem mit einer Datenbank oder einer Plattform bzw. Cloud-Plattform via Internet ermöglich auch, bei jeder Inspektion oder einem sonstigen Handling des Bauteils Informationen über das Bauteil an die Plattform bzw. Datenbank rückzumelden, so dass diese Informationen beim nächsten Abruf, insbesondere bei der nächsten turnusmäßigen Inspektion verfügbar sind. Beispielsweise kann dann bei einer turnusmäßigen Inspektion nicht nur erkannt werden, um welches Bauteil es sich genau handelt, welche Spezifikationen dieses Bauteil aufweist und inwieweit erkannte Betriebsparameter innerhalb der zulässigen Wertebereiche liegen, sondern es kann gleichzeitig erkannt werden, wann das Bauteil eingebaut wurde, welche Störungen gegebenenfalls vorlagen und welche Betriebsparameter-Informationen aus früheren Inspektionen vorhanden sind. Es lässt sich beispielsweise auch die gesamte Historie des inspizieren Bauteils auf einem mobilen Endgerät darstellen.

Wenn das erfindungsgemäße bewegliche Bauteil in einer verfahrenstechnischen Industrieanlage verbaut ist, kann man darüber hinaus auch das Steuerungssystem der Industrieanlage mit in das vorzugsweise vorhandene Informationssystem einbinden, so dass bei einer Inspektion eines bestimmten beweglichen Bauteils nicht nur via Internet zusätzliche Informationen zu speziell diesem Bauteil und gegebenenfalls dessen Historie vor Ort verfügbar sind, sondern auch Daten, die via Intranet aus der Steuerung geholt werden, wie beispielsweise die Betriebsstunden einer fluidführenden Rohrleitung, die hindurchgeleiteten Medien, deren Druck und Temperatur und dergleichen mehr.

Erfindungsgemäß ist das digital auslesbare Informationselement mit einem digitalen Speicher versehen, der nicht nur von außen auslesbar ist, sondern auch von außen beschreibbar ist. Dies erhöht die Vielseitigkeit der im Informationselement vorgehaltenen Daten. Insbesondere kann das Informationselement dann viele Informationen direkt liefern, die ansonsten eine Intranet- oder Internet-Verbindung erfordern. Hierdurch ist es auch möglich, bei einer Inspektion relevante Zusatzinformationen direkt in das digital auslesbare Informationselement hineinzuschreiben, beispielsweise die Tatsache und der Zeitpunkt einer durchgeführten Inspektion sowie etwaige Auffälligkeiten am Bauteil. Diese Informationen können dann bei einer nachfolgenden Inspektion direkt ausgelesen werden.

Der vorhandene digitale Speicher des erfindungsgemäßen, digital auslesbaren Informationselements umfasst beispielsweise eine Logdatei, in der die Historie des beweglichen Bauteils sukzessive dokumentiert wird. Weitere Vorteile bietet dies, wenn das bewegliche Bauteil außerdem mit Messelementen versehen ist, die digitale Messwerte an das Informationselement liefern, wo diese in der Logdatei gespeichert werden, gegebenenfalls zusätzlich zu von außen in die Logdatei geschriebenen Daten. So ist es insbesondere möglich, dass bei turnusmäßigen Inspektionen nicht nur der momentane Betriebszustand des beweglichen Bauteils erkannt und beurteilt werden kann, sondern auch die Logdatei ausgelesen und somit die Historie des Bauteils mit berücksichtigt werden kann.

Nach einer weiteren bevorzugten Ausgestaltung des erfindungsgemäßen beweglichen Bauteils ist das digital auslesbare Informationselement mit einer Sendeeinheit, insbesondere mit einer Sende- und Empfangseinheit zum drahtlosen Übertragen von Informationen versehen. Dies ermöglicht, dass ein Zugang zum inspizierten Bauteil nicht notwendig ist, so dass turnusmäßige Inspektionen vor Ort sogar überflüssig werden können. Denn mittels drahtloser Kommunikation können die im Informationselement gespeicherten Daten, insbesondere auch Logdaten, beispielsweise von der zentralen Steuerung einer Industrieanlage, jedoch auch via Internet von einem beliebigen Ort, insbesondere vom Hersteller des Bauteils oder einer entsprechenden Serviceorganisation ausgelesen sowie gegebenenfalls durch Beschreiben modifiziert werden.

Soweit das erfindungsgemäße, digital auslesbare Informationselement eine Energieversorgung benötigt, weil es beispielsweise mit einer aktiven Sendeeinheit versehen ist, oder weil ein elektronischer Speicher vorhanden ist, ist das bewegliche Bauteil vorzugsweise so ausgestaltet, dass das auslesbare Informationselement durch Nutzen von Bewegungen des beweglichen Bauteils und/oder durch Nutzbarmachen der Energie eines durch das bewegliche Bauteil gegebenenfalls geleiteten Fluids und/oder durch Nutzen von Wärmeenergie aufgrund von Temperaturdifferenzen am beweglichen Bauteil mit elektrischer Energie versorgt wird. Dies kann beispielsweise durch Ausnutzen von Temperaturschwankungen oder Temperaturdifferenzen oder durch Nutzen der Strömungsenergie des Fluids erzielt werden.

Soweit das bewegliche Bauteil nur von Zeit zu Zeit vor Ort inspiziert werden soll, kann das erfindungsgemäße, digital auslesbare Informationselement auch so ausgestaltet sein, dass es von einer Ausleseeinheit drahtlos mit elektrischer Energie versorgt werden kann.

Das erfindungsgemäße bewegliche Bauteil kann eine längenveränderliche und/oder angular und/oder axial und/oder lateral bewegliche Aufhängung oder eine längenveränderliche und/oder angular und/oder axial und/oder lateral bewegliche Stütze für die fluidführende Rohrleitung sein. Alternativ kann das erfindungsgemäße bewegliche Bauteil auch ein flexibles Leitungselement zum Einbau in die fluidführende Leitung, insbesondere Rohrleitung sein, wobei es dann ein Metallrohr mit mindestens einem ringgewellten oder wendelförmig gewellten Abschnitt und/oder mit mindestens einem schraubengangförmig gewickelten Abschnitt und/oder mit mindestens einem aus einzelnen gegeneinander beweglichen Segmenten gebildeten Abschnitt sowie beidseits mit Anschlussstücken und/oder Flanschen zum Einbau in die Leitung aufweist. Insbesondere kann das flexible Leitungselement ein Kompensator zum Einbau in eine fluidführende Rohrleitung sein, insbesondere in einer verfahrenstechnischen Industrieanlage.

Das erfindungsgemäße bewegliche Bauteil kann eine Messvorrichtung für einen momentanen Wert eines Zustandsparameters eines momentanen Betriebszustands des beweglichen Bauteils aufweisen, die im Wesentlichen aus einer digitalen Wiedergabe- und/oder Übertragungseinheit für digital erfasste Messdaten von Zustandsparametern besteht, wobei eine Erfassung der Zustandsparameter und die Generierung von digitalen Messdaten über digitale Sensoren und/oder über analoge Sensoren mit nachgeschaltetem Analog-Digital-Wandler erfolgt.

Hierbei wird die Funktionseinheit "Messvorrichtung" umfassend verstanden; diese kann im Sinne der Erfindung eine Wiedergabeeinheit sein, die direkt ablesbar ist und direkt am Bauteil oder separat, in der Nähe des Bauteils angeordnet ist. Alternativ oder auch zusätzlich kann es sich bei der erfindungsgemäßen Messvorrichtung um eine Übertragungseinheit handeln, welche die digital erfassten Messdaten von Zustandsparametern an eine nicht zum erfindungsgemäßen beweglichen Bauteil gehörende Empfangsstation überträgt, beispielsweise eine zentrale Steuerung einer Industrieanlage, wobei die Übertragungseinheit gegebenenfalls nicht mittels Augenschein ablesbar ist, sondern nur mit technischen Hilfsmitteln, wie eben einer Empfangsstation, welche die digitalen Messdaten oder Ergebnisse einer Auswertung dieser digitalen Messdaten erkennbar macht.

Die erfindungsgemäße digitale Messvorrichtung hat den Vorteil, dass die an diese gemeldeten digitalen Messwerte fortlaufend gespeichert werden können, so dass man zur Beurteilung der Betriebsverhältnisse am beweglichen Bauteil nicht auf die in den regelmäßigen Inspektionen erhaltenen, stichprobenartigen Werte angewiesen ist. Digitale Messwerte sind im Allgemeinen auch genauer als die mit einfachsten Mitteln gewonnenen analogen Messwerte aus dem Stand der Technik, und neben den bekannten Messvorrichtungen, die lediglich Auslenkungen und Verschiebestrecken anzeigen, kann die erfindungsgemäße digitale Messvorrichtung auch weitere Zustandsparameter von momentanen Betriebszuständen anzeigen (d.h. Wiedergeben und/oder Übertragen), wie bei-spielsweise die Temperatur des Bauteils, den Druck eines hindurchgeleiteten Fluids, Schwingungsamplituden und deren Frequenzen und dergleichen mehr.

Darüber hinaus ergibt sich durch die erfindungsgemäße digitale Messvorrichtung die Möglichkeit einer Vernetzung des Bauteils mit der elektronischen Datenverarbeitung eines Betriebs bzw. der Steuerung einer Anlage, von der ein Teil die Leitung für Fluide ist, und es ergibt sich die Möglichkeit, die digitalen Messwerte nicht nur laufend auszuwerten, sondern auch zu speichern und aus den gespeicherten Werten Erkenntnisse zu gewinnen, wie beispielsweise über die Restlebensdauer des entsprechenden beweglichen Bauteils.

Neben der Echtzeitüberwachung und einer laufenden Dokumentation können aus den digitalen Messdaten auch Schadensanalysen erstellt werden, wenn etwa Schäden am überwachten beweglichen Bauteil aufgetreten sein sollten.

Schließlich können aus den laufenden digitalen Messdaten des überwachten beweglichen Bauteils auch Rückschlüsse auf momentane Betriebszustände der gesamten fluidführenden Leitung oder eines durch ein flexibles Leitungselement geleiteten Fluids gewonnen werden, wie beispielsweise die Temperatur sowie auftretende Druckpulse und Vibrationen.

Eine Echtzeit-Überwachung von Betriebszuständen des überwachten beweglichen Bauteils ermöglicht weiterhin, bisher notwendige Sicherheitszuschläge bei der Auslegung der beweglichen Bauteile zu reduzieren.

Die digitalen Sensoren oder die Analog-Digital-Wandler, die zur Generierung der digitalen Messdaten notwendig sind, benötigen in der Regel eine elektri-sche Energieversorgung. Dies kann neben langlebigen Batterien oder gegebenenfalls Solarzellen auch dadurch erfolgen, dass etwa in der Leitung bzw. Rohrleitung auftretende Temperaturdifferenzen benutzt werden, um über einen thermoelektrischen Generator elektrischen Strom zu erzeugen. Wenn Vibrationsbewegungen vorhanden sind, können diese ebenfalls zur Erzeugung von elektrischem Strom verwendet werden. Wenn es sich beim beweglichen Bauteil um ein flexibles Leitungselement handelt, durch das ein Fluid strömt, kann auch die Strömungsenergie des Fluids zur Gewinnung von elektrischer Energie für die Versorgung der digitalen Sensoren oder eines Analog-Digital-Wandlers verwendet werden.

Mit der erfindungsgemäßen Messvorrichtung ist es möglich, verschiedenste Zustandsparameter von momentanen Betriebszuständen des beweglichen Bauteils zu überwachen. Hierzu zählen neben der Auslenkung bzw. Verschiebungsstrecke auch die Temperatur, Spannungen im Material (beispielsweise mittels Dehnmessstreifen detektiert), Vibrationen, Beschleunigungen sowie, wenn es sich beim beweglichen Bauteil um ein flexibles Leitungselement handelt, der Druck und die Durchflussgeschwindigkeit des durchgeleiteten Fluids sowie gegebenenfalls auch Ablagerungen im Bauteil, wie beispielsweise Kondensat oder Verschlackungen.

Wenn die erfindungsgemäß erfassten digitalen Messdaten fortlaufend ausgewertet und/oder gespeichert werden, können retrospektiv Rückschlüsse auf die im Betrieb herrschenden Anforderungen an das bewegliche Bauteil gezogen werden, was dazu dienen kann, die Auslegung eines etwaigen Ersatzteils zu optimieren. Beispielsweise kann es sich dann, wenn es sich beim beweglichen Bauteil um einen Kompensator mit einem Ankerelement handelt, durch Auswertung der digital erfassten Messdaten herausstellen, dass an diesem Einbauort die Ankerbelastung minimal ist, so dass bei einem Ersatz dieses flexiblen Leitungselements ein Bauteil ohne Ankerelement eingesetzt werden kann.

Die Wiedergabe- und/oder Übertragungseinheit, die die Messvorrichtung des erfindungsgemäßen beweglichen Bauteils bildet, ist vorzugsweise als Sender zum drahtlosen Übertragen von Messdaten ausgebildet, der am beweglichen Bauteil oder in der Nähe des beweglichen Bauteils angeordnet ist.

Insbesondere kann eine solche Wiedergabe- und/oder Übertragungseinheit zweiteilig ausgebildet sein und außer dem Sender zum drahtlosen Übertragen von Messdaten auch ein vom beweglichen Bauteil beabstandetes, drahtlos mit dem Sender kommunizierendes Gerät zum Verarbeiten und/oder Darstellen von digitalen Messdaten, umfassen. Ein solcher Sender ermöglicht, die digitalen Messdaten nicht nur in die unmittelbare Umgebung des beweglichen Bauteils, sondern auch an beispielsweise eine zentrale Steuerung einer Industrieanlage zu senden. Das vorzugsweise vorhandene drahtlos mit dem Sender kommunizierende Gerät zum Verarbeiten und/oder Anzeigen von digitalen Messdaten kann ein handelsübliches mobiles Endgerät wie ein Tablet-Computer oder ein Smartphone sein, so dass auch mit der Erfindung ein herkömmlicher Inspektionsrundgang durchgeführt werden kann, bei dem momentane und/oder seit der letzten Inspektion gespeicherte Messdaten über Zustandsparameter abgefragt werden.

Wenn der Sender zum drahtlosen Übertragen von Messdaten in der Nähe des beweglichen Bauteils angeordnet ist, kann dieser über eine Signalleitung oder drahtlos mit den digitalen Sensoren am beweglichen Bauteil kommunizieren. Beides spart Bauraum in der unmittelbaren Umgebung des beweglichen Bauteils und beides ist auch dann leicht zu realisieren, wenn das bewegliche Bauteil von einer Isolierung umgeben ist.

Eine besonders vorteilhafte Weiterbildung der vorliegenden Erfindung besteht darin, dass die die erfindungsgemäße Messvorrichtung bildende Wiedergabe- und/oder Übertragungseinheit als Sender und als Empfänger zum drahtlosen Übertragen von digitalen Daten ausgebildet ist. Sie ist in diesem Fall am beweglichen Bauteil angeordnet und dient neben dem Übertragen von Messdaten auch zum Empfangen von Steuerungsdaten, während das bewegliche Bauteil mit Aktoren versehen ist, die die Steuerungsdaten in Bewegungen umsetzen. Hierdurch können Federvorspannungen, Winkellagen, Dämpfungen und dergleichen mehr aktiv verändert werden, und zwar vorzugsweise mittels Fernzugriff, beispielsweise aus der zentralen Steuerung einer Industrieanlage heraus.

Wenn die digitale Wiedergabe- und/oder Übertragungseinheit durch Nutzen von Bewegungen des beweglichen Bauteils und/oder durch Nutzbarmachen der Energie eines durch das bewegliche Bauteil geleiteten Fluids mit elektrischer Energie versorgt wird, kann eine Messvorrichtung zum Erzeugen von digitalen Messdaten, sowie alternativ oder zusätzlich ein digital auslesbarer elektronischer Datenspeicher am beweglichen Bauteil angeordnet werden, ohne Stromleitungen oder Batterien zur elektrischen Energieversorgung verwenden zu müssen. Die für einen elektronischen Datenspeicher oder eine digitale Messvorrichtung notwendige elektrische Energie wird vielmehr direkt am beweglichen Bauteil und insbesondere unter Nutzung der sich immer wieder ändernden Betriebszustände des beweglichen Bauteils vor Ort erzeugt.

Wenn das erfindungsgemäße bewegliche Bauteil ein flexibles Leitungselement ist, kann der Datenspeicher und/oder die Messvorrichtung des erfindungsgemäßen Bauteils mindestens einen Generator zum Erzeugen elektrischer Energie aus der Strömung des durch das flexible Leitungselement geleiteten Fluids umfassen.

Der Datenspeicher und/oder die Messvorrichtung des erfindungsgemäßen beweglichen Bauteils kann daneben auch mindestens ein Element zum Erzeugen elektrischer Energie aus Bewegungen des beweglichen Bauteils umfassen, bei-spielsweise aus Vibrationsbewegungen, Auslenkungen bzw. Verschiebungsstrecken, Spannungen im Material, Beschleunigungen und dergleichen mehr, wobei dieses Element insbesondere ein piezoelektrisches Element sein kann.

Besondere Vorteile ergeben sich, wenn der Datenspeicher und/oder die Messvorrichtung des erfindungsgemäßen beweglichen Bauteils mindestens einen thermoelektrischen Generator zum Erzeugen elektrischer Energie aus Temperaturschwankungen oder Temperaturdifferenzen am beweglichen Bauteil umfasst. So können etwa in der Rohrleitung auftretende Temperaturdifferenzen oder auch Temperaturschwankungen des durchgeleiteten Fluids zur Erzeugung von elektrischer Energie genutzt werden.

Ein Ausführungsbeispiel für ein erfindungsgemäß ausgebildetes bewegliches Bauteil wird im Folgenden anhand der beigefügten Zeichnungen beschrieben. Es zeigen:
- Figur 1: eine schematische Darstellung eines als flexibles Leitungselement ausgebildeten Beispiels für ein erfindungsgemäßes bewegliches Bauteil;
- Figur 2: ein Beispiel für eine Ausleseeinheit, die mit einem erfindungsgemäßen Informationselement kommuniziert;
- Figur 3: ein als bewegliche Aufhängung ausgebildetes, erfindungsgemäßes bewegliches Bauteil;
- Figur 4: ein als bewegliche Stütze ausgebildetes, erfindungsgemäßes bewegliches Bauteil;
- Figur 5: eine andere Ausführungsform eines als flexibles Leitungselement ausgebildeten, erfindungsgemäßen beweglichen Bauteils;
- Figur 6: eine weitere Ausführungsform eines als flexibles Leitungselement ausgebildeten, erfindungsgemäßen beweglichen Bauteils

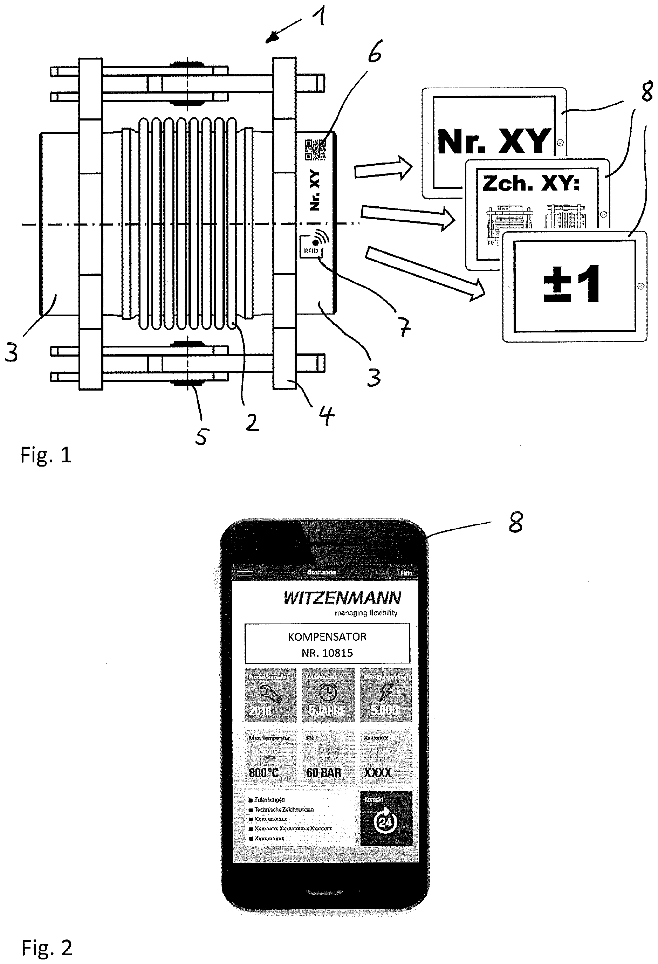

Figur 1 zeigt in einer schematischen Darstellung ein als flexibles Leitungselement 1, genauer als Angularkompensator ausgebildetes bewegliches Bauteil.

Dieser Angularkompensator besteht im Wesentlichen aus einem gewellten Metallrohr 2, das an seinen Enden jeweils ein glattzylindrisches Anschlussstück 3 zum Einbau in eine (nicht dargestellte) starre Rohrleitung aufweist, sowie eine an den beiden Anschlussstücken 3 befestigte Verankerung 4 mit zwei Ankergelenken 5, um Angularbewegungen zu ermöglichen.

An einem der beiden glattzylindrischen Anschlussstücke 3 ist ein nicht erfindungsgemäß ausgestaltetes digital auslesbares Informationselement 6 in Form eines QR-Codes sowie in zweites erfindungsgemäßes digital auslesbares Informationselement 7 in Form eines RFID-Chips angebracht.

Neben dem flexiblen Leitungselement 1 sind symbolisch drei unterschiedliche Ausleseeinheiten 8 in Form jeweils eines Tablet-Computers dargestellt. Hierbei ist symbolisiert, dass durch optisches Auslesen des QR-Codes mittels einer Kamera des Tablet-Computers, oder mittels Auslesen des RFID-Chips, entweder direkt durch den Tablet-Computer oder über ein drahtloses Intranet, Informationen zur Identifikation des flexiblen Leitungselements ("Nummer XY") oder aktuelle Betriebsparameter des flexiblen Leitungselements 1, gegebenenfalls mit Logdaten (" +- 1") ausgelesen werden können. Mit "Zch.XY" wird symbolisiert, dass von der Ausleseeinheit 8 weitere Informationen, hier technische Zeichnungen, über das flexible Leitungselement 1 aus dem Informationselement 6, 7, oder aber durch Kontaktaufnahme via Internet mit einer Cloud-Plattform (nicht dargestellt) eingelesen und auf dem Display angezeigt werden.
Figur 2 zeigt ein weiteres Ausführungsbeispiel für eine Ausleseeinheit 8, mit der die beiden Informationselemente 6, 7, insbesondere der QR-Code ausgelesen werden können. Es handelt sich hier um ein handelsübliches Smartphone. Auf dessen Display ist symbolisiert, welche Informationen beispielsweise bei einer Inspektion des flexiblen Leitungselements 1, das in Figur 1 dargestellt ist, beim Auslesen des QR-Codes verfügbar gemacht werden können.

Vorliegend setzen sich die auf dem Display der Ausleseeinheit 8 dargestellten Informationen aus statischen Informationen, die im linken unteren Fenster dargestellt sind, und dynamischen Informationen zusammen. Die statischen Informationen umfassen beispielsweise Daten zu Zulassungen, technische Zeichnungen zum flexiblen Leitungselement 1 und dergleichen mehr. Die dynamischen Informationen, die insbesondere durch Abgleich mit einer Cloud-Plattform des Herstellers des flexiblen Leitungselements 1 via Internet beschafft werden, umfassen vorliegend das Produktionsjahr (hier 2018), die mittlere Lebensdauer dieses speziellen flexiblen Leitungselements 1 (hier 5 Jahre), die Anzahl der Bewegungszyklen, für die dieses spezielle flexible Leitungselement 1 ausgelegt ist (hier 5.000 Zyklen), die maximale Temperatur, der das flexible Leitungselement 1 ausgesetzt werden darf (hier 800°C), den Nenndruck (hier 60 bar) und dergleichen Informationen mehr. Schließlich ist auch ein Feld "Kontakt" angezeigt, mit dem durch Antippen eine Telefonverbindung mit einer 24h-Hotline hergestellt werden kann. Die entsprechende Anwendungssoftware (App), die auf der Ausleseeinheit 8 installiert ist und die in Figur 2 beispielhaft gezeigte Ansicht generiert, wird vom Hersteller des flexiblen Leitungselements 1 bereitgestellt.

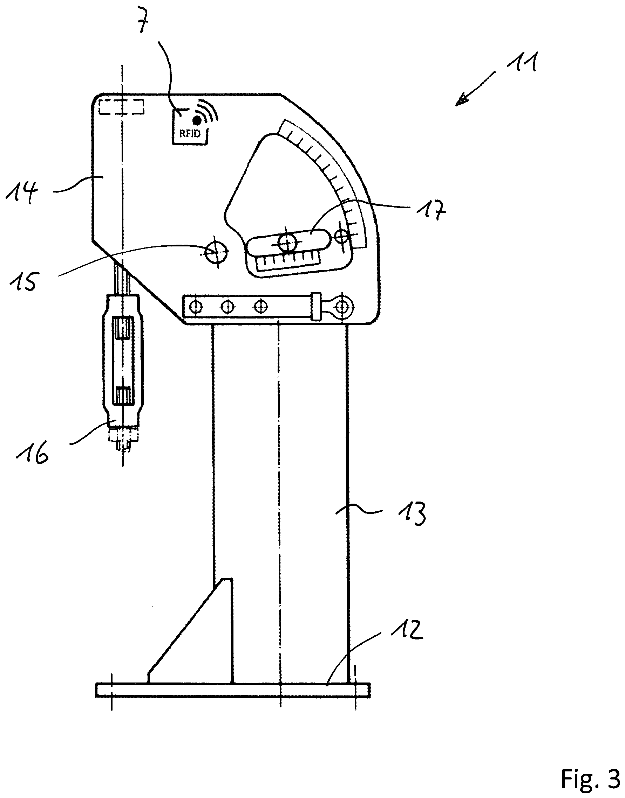

In Figur 3 ist ein erfindungsgemäßes bewegliches Bauteil dargestellt, das als längenveränderliche Aufhängung 11 ausgebildet ist. Diese besteht im Wesentlichen aus einer Basis 12 mit einem Federgehäuse 13 für eine (hier nicht sichtbare) Schraubenfeder, einem Umlenkgehäuse 14, das eine (hier ebenfalls nicht sichtbare), um eine Drehachse 15 bewegliche Gelenkanordnung enthält, sowie einem Spannschloss 16, an das die fluidführende Leitung angehängt wird. Die im Umlenkgehäuse 14 befindliche Gelenkanordnung verbindet das Spannschloss 16 mit der im Federgehäuse 13 sitzenden Schraubenfeder, so dass das Spannschloss 16 im Ergebnis federnd an der Basis 12 befestigt ist und dementsprechend axial beweglich ist.

Im Umlenkgehäuse 14 sitzt außerdem eine Lastjustierung 17, um die Vorspannung der Schraubenfeder einzustellen. Am Umlenkgehäuse 14 ist ein digital auslesbares Informationselement 7 in Form eines RFID-Chips angebracht.

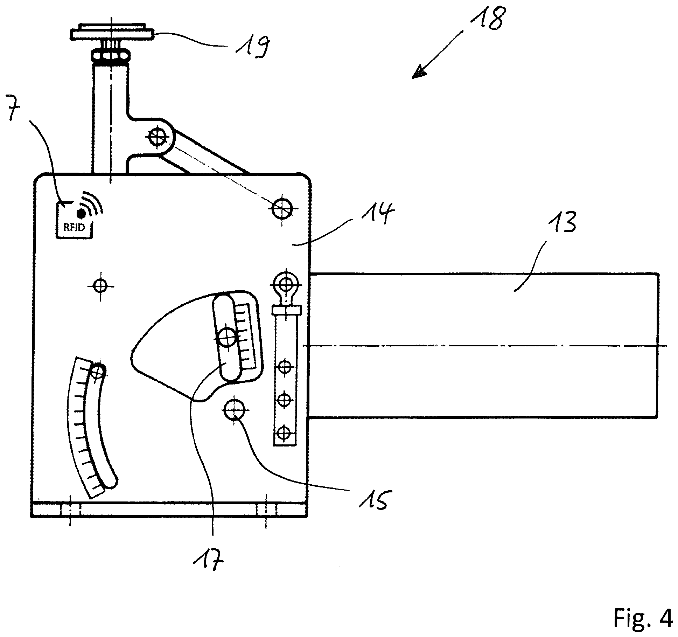

In Figur 4 ist ein erfindungsgemäßes bewegliches Bauteil dargestellt, das als Stütze 18 für eine fluidführende Rohrleitung ausgebildet ist. Die (nicht dargestellte) fluidführende Rohrleitung wird hierbei von einer Tragplatte 19 abgestützt, wobei diese Tragplatte 19 wiederum axial beweglich ist. Dies wird über eine (ebenfalls nicht sichtbare) Gelenkanordnung innerhalb des Umlenkgehäuses 14 bewerkstelligt, die die Tragplatte 19 mit einer (nicht sichtbaren) Schraubenfeder im Federgehäuse 13 gelenkig verbindet. Die Mechanik ist grundsätzlich die gleiche wie im Ausführungsbeispiel aus Figur 3, so dass auch hier eine Lastjustierung 17 vorhanden ist. Auch hier ist am Umlenkgehäuse 14 ein digital auslesbares Informationselement 7 in Form eines RFID-Chips angebracht.

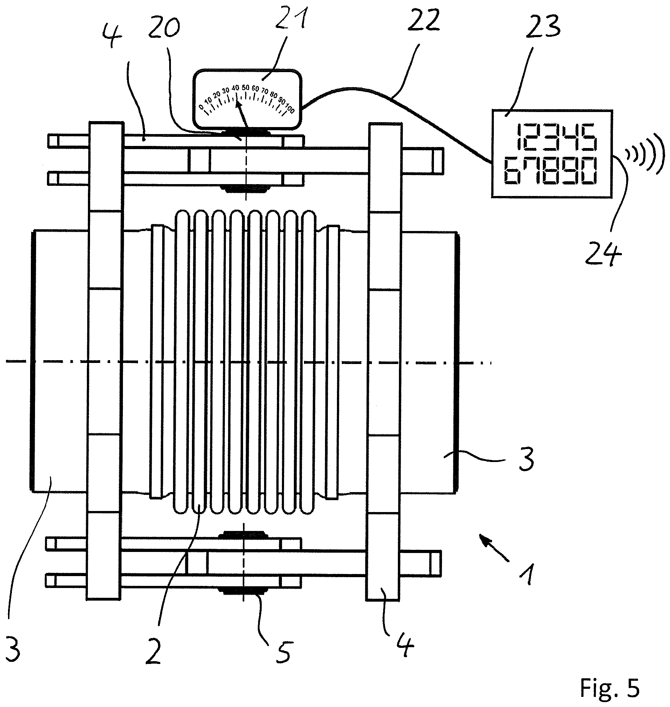

Figur 5 zeigt wiederum in einer schematischen Darstellung ein als flexibles Leitungselement 1, genauer als Angularkompensator ausgebildetes bewegliches Bauteil.

Dieser Angularkompensator besteht im Wesentlichen aus einem gewellten Metallrohr 2, das an seinen Enden jeweils ein glattzylindrisches Anschlussstück 3 zum Einbau in eine (nicht dargestellte) starre Rohrleitung aufweist, sowie einem an den beiden Anschlussstücken 3 befestigte Verankerung 4 mit zwei Ankergelenken 5, um Angularbewegungen zu ermöglichen.

An einem der Ankergelenke 5 ist ein digitaler Sensor 20 mit einer lediglich symbolisch zu verstehenden, analogen Skala 21 angebracht. Dieser Sensor 20 detektiert die Winkellage des Ankergelenks 5 und meldet diese über eine Signalleitung 22 an eine Wiedergabe- und Übertragungseinheit 23, die als digitale Anzeige symbolisiert ist, und die gleichzeitig als Sender 24 zum drahtlosen Übertragen von Messdaten an ein Intranet (nicht dargestellt) eines Anlagenbetreibers fungiert.

Die Signalleitung 22 kann hierbei ebenfalls durch eine Funkstrecke ersetzt werden, so dass beispielsweise das flexible Leitungselement 1 mit einer Isolierung versehen werden kann, die dann nicht durchbrochen werden müsste. Die Wiedergabe- und Übertragungseinheit 23 ist zwar in der Nähe des flexiblen Leitungselements 1 angeordnet, jedoch nicht unmittelbar an diesem angebracht. Es liegt auf der Hand, dass dies außerdem den für das flexible Leitungselement 1 benötigten Bauraum vorteilhaft verringert, und dass die Wiedergabe- und Übertragungseinheit 23 mit ihrem Sender 24 etwaigen hohen Temperaturen, die das flexible Leitungselement 1 vom durchgeleiteten Fluid aufnimmt, vorteilhafterweise nicht ausgesetzt ist.

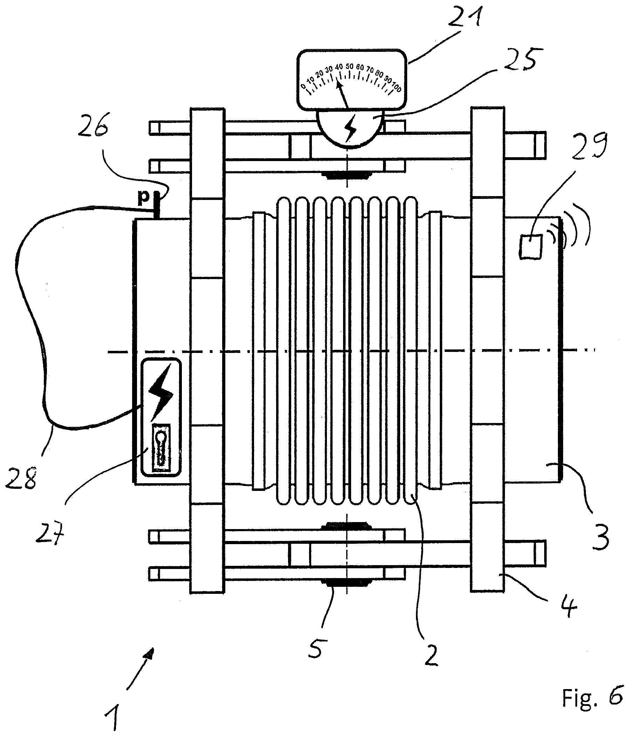

Das als Angularkompensator ausgebildete bewegliche Bauteil 1 nach Figur 6 besteht wiederum im Wesentlichen aus einem gewellten Metallrohr 2, das an seinen Enden jeweils ein glattzylindrisches Anschlussstück 3 zum Einbau in eine (nicht dargestellte) starre Rohrleitung aufweist, sowie einer an den beiden Anschlussstücken 3 befestigten Verankerung 4 mit zwei Ankergelenken 5, um Angularbewegungen zu ermöglichen.

An einem der Ankergelenke 5 ist eine erste Messvorrichtung 25 zum Detektieren der Winkellage des Ankergelenks 5 angebracht, was mit einer lediglich symbolisch zu verstehenden analogen Skala 21 verdeutlicht wird. Ein Blitz-Zeichen an der ersten Messvorrichtung 25 symbolisiert, dass dort ein Generator zur Versorgung der ersten Messvorrichtung 25 mit elektrischer Energie verbaut ist, welcher aus den Bewegungen des Ankergelenks 5 elektrische Energie erzeugt.

An einem der glattzylindrischen Anschlussstücke 3 sind eine zweite Messvorrichtung 26 zum Detektieren des Drucks p innerhalb des flexiblen Leitungselements 1 sowie eine dritte Messvorrichtung 27 zum Detektieren der Temperatur am flexiblen Leitungselement 1 und gegebenenfalls der Temperatur innerhalb des flexiblen Leitungselements 1 vorgesehen. Die dritte Messvorrichtung 27 ist, wie auch hier das Blitz-Zeichen symbolisiert, mit einem Generator ausgestattet, der sowohl die dritte Messvorrichtung 27 als auch die zweite Messvorrichtung 26, letztere über eine Leitung 28, mit der notwendigen elektrischen Energie versorgt. Dies kann ein thermoelektrischer Generator sein, der sich Temperaturdifferenzen oder Temperaturschwankungen zu Nutze macht; an dieser Stelle wäre auch ein Generator einsetzbar, der elektrische Energie aus der durch das flexible Leitungselement 1 geleiteten Fluidströmung induktiv erzeugt, bei-spielsweise mittels einer Kármánschen Wirbelstraße.

Die ersten, zweiten und dritten Messvorrichtungen 25, 26, 27 können mit einem elektronischen Datenspeicher 29 zusammenwirken und digitale Messdaten dort ablegen. Dieser elektronische Datenspeicher 29 ist von außen digital auslesbar, beispielsweise über Nahfeldkommunikation, oder aber der Datenspeicher 29 umfasst auch eine Übertragungseinheit zum Übertragen von insbesondere den digitalen Messdaten an ein (nicht dargestelltes) Intranet eines Anlagenbetreibers oder an das Internet, von wo die Daten beispielsweise an den Bauteilhersteller zurückgemeldet werden können.

## Patentansprüche

1. Bewegliches Bauteil aus Metall zum Ausgleich von In-Sich-Bewegungen einer Leitung für Fluide, insbesondere einer fluidführenden Rohrleitung, wobei das bewegliche Bauteil insbesondere längenveränderlich und/oder angular und/oder axial und/oder lateral beweglich ist,
wobei am beweglichen Bauteil ein digital auslesbares Informationselement (6, 7) angebracht ist, **dadurch gekennzeichnet, dass** das auslesbare Informationselement (6, 7) mit einem von außen, insbesondere mittels Nahfeldkommunikation auslesbaren digitalen Speicher versehen ist, und wobei der digitale Speicher des auslesbaren Informationselements (6, 7) von außen, insbesondere mittels Nahfeldkommunikation beschreibbar ist.

2. Bewegliches Bauteil nach Anspruch 1, wobei das bewegliche Bauteil eine längenveränderliche und/oder eine angular und/oder axial und/oder lateral bewegliche Aufhängung, oder eine längenveränderliche und/oder eine angular und/oder axial und/oder lateral bewegliche Stütze für die fluidführende Rohrleitung ist.

3. Bewegliches Bauteil nach Anspruch 1, wobei das bewegliche Bauteil ein flexibles Leitungselement (1) zum Einbau in die fluidführende Rohrleitung ist und ein Metallrohr (2) mit mindestens einem ringgewellten oder wendelförmig gewellten Abschnitt und/oder mit mindestens einem schraubengangförmig gewickelten Abschnitt und/oder mit mindestens einem aus einzelnen gegeneinander beweglichen Segmenten gebildeten Abschnitt sowie beidseits mit Anschlussstücken (3) und/oder Flanschen zum Einbau in die Rohrleitung aufweist.

4. Bewegliches Bauteil nach Anspruch 3, wobei das flexible Leitungselement (1) ein Kompensator zum Einbau in eine fluidführende Rohrleitung ist.

5. Bewegliches Bauteil nach mindestens einem der Ansprüche 1 bis 4, wobei der digitale Speicher des auslesbaren Informationselements (6, 7) eine Logdatei umfasst.

6. Bewegliches Bauteil nach mindestens einem der Ansprüche 1 bis 5, wobei das auslesbare Informationselement (6, 7) mit einer Sendeeinheit oder einer Sende- und Empfangseinheit zum drahtlosen Übertragen von Informationen versehen ist.

7. Bewegliches Bauteil nach mindestens einem der Ansprüche 1 bis 6, wobei das auslesbare Informationselement (6, 7) von einer Ausleseeinheit (8) drahtlos mit elektrischer Energie versorgbar ist.

8. Bewegliches Bauteil nach mindestens einem der Ansprüche 1 bis 7, wobei das auslesbare Informationselement (6, 7) im Wesentlichen ein RFID-Chip ist.

9. Bewegliches Bauteil nach mindestens einem der Ansprüche 1 bis 8, wobei das digital auslesbare Informationselement einen auslesbaren Code enthält, mit dem Zusatzinformationen von einem Webserver angefordert werden können.

10. Bewegliches Bauteil nach mindestens einem der Ansprüche 1 bis 9, wobei das auslesbare Informationselement (6, 7) durch Nutzen von Bewegungen des beweglichen Bauteils und/oder durch Nutzbarmachen der Energie eines durch das bewegliche Bauteil geleiteten Fluids und/oder durch Nutzen von Wärmeenergie aufgrund von Temperaturdifferenzen am beweglichen Bauteil mit elektrischer Energie versorgt wird.

11. Bewegliches Bauteil nach mindestens einem der Ansprüche 1 bis 10, wobei das bewegliche Bauteil mit Messelementen versehen ist, die mit dem auslesbaren Informationselement (6, 7) verbunden sind und Messdaten über Betriebsparameter des beweglichen Bauteils an das auslesbare Informationselement (6, 7) liefern.

12. Bewegliches Bauteil nach Anspruch 11, wobei das bewegliche Bauteil eine Messvorrichtung für einen momentanen Wert eines Zustandsparameters eines momentanen Betriebszustands des beweglichen Bauteils aufweist, die im Wesentlichen aus einer digitalen Wiedergabe- und/oder Übertragungseinheit für digital erfasste Messdaten von Zustandsparametern besteht, wobei eine Erfassung der Zustandsparameter und die Generierung von digitalen Messdaten über digitale Sensoren und/oder über analoge Sensoren mit nachgeschaltetem Analog-Digital-Wandler erfolgt.

13. Bewegliches Bauteil nach einem der Ansprüche 11 oder 12, wobei die digitale Wiedergabe- und/oder Übertragungseinheit durch Nutzen von Bewegungen des beweglichen Bauteils und/oder durch Nutzbarmachen der Energie eines durch das bewegliche Bauteil geleiteten Fluids mit elektrischer Energie versorgt wird.

14. Bewegliches Bauteil nach mindestens einem der Ansprüche 11 bis 13, wobei die Wiedergabe- und/oder Übertragungseinheit einen Sender zum drahtlosen Übertragen von Messdaten umfasst, der am beweglichen Bauteil oder in unmittelbarer Nähe des beweglichen Bauteils angeordnet ist.

## Claims

1. Movable component made of metal for compensating for in-situ movements of a line for fluids, in particular a fluid-carrying pipeline, wherein the movable component is in particular variable in length and/or angularly and/or axially and/or laterally movable,
wherein a digitally readable information element (6, 7) is attached to the movable component, **characterised in that** the readable information element (6, 7) is provided with a digital memory which can be read from the outside, in particular by means of near-field communication, and wherein the digital memory of the readable information element (6, 7) is writable from the outside, in particular by means of near field communication.

2. Movable component according to claim 1, wherein the movable component is a suspension which is variable in length and/or angularly and/or axially and/or laterally movable, or a support for the fluid-carrying pipeline, which support is variable in length and/or angularly and/or axially and/or laterally movable.

3. Movable component according to claim 1, wherein the movable component is a flexible line element (1) for installation in the fluid-carrying pipeline and has a metal pipe (2) with at least one annularly corrugated or helically corrugated section and/or with at least one section wound in screw-thread fashion and/or with at least one section formed from individual segments which are movable relative to one another, and also with connecting pieces (3) and/or flanges on both sides for installation in the pipeline.

4. Movable component according to claim 3, wherein the flexible line element (1) is a compensator for installation in a fluid-carrying pipeline.

5. Movable component according to at least one of claims 1 to 4, wherein the digital memory of the readable information element (6, 7) comprises a log file.

6. Movable component according to at least one of claims 1 to 5, wherein the readable information element (6, 7) is provided with a transmitting unit or a transmitting and receiving unit for wireless transmission of information.

7. Movable component according to at least one of claims 1 to 6, wherein the readable information element (6, 7) can be supplied wirelessly with electrical energy by a readout unit (8).

8. Movable component according to at least one of claims 1 to 7, wherein the readable information element (6, 7) is substantially an RFID chip.

9. Movable component according to at least one of claims 1 to 8, wherein the digitally readable information element contains a readable code with which additional information can be requested from a web server.

10. Movable component according to at least one of claims 1 to 9, wherein the readable information element (6, 7) is supplied with electrical energy by utilising movements of the movable component and/or by utilising the energy of a fluid conducted through the movable component and/or by utilising thermal energy due to temperature differences on the movable component.

11. Movable component according to at least one of claims 1 to 10, wherein the movable component is provided with measuring elements which are connected to the readable information element (6, 7) and supply measuring data on operating parameters of the movable component to the readable information element (6, 7).

12. Movable component according to claim 11, wherein the movable component has a measuring device for an instantaneous value of a state parameter of an instantaneous operating state of the movable component, which measuring device substantially consists of a digital reproduction and/or transmission unit for digitally detected measurement data of state parameters, wherein the state parameters are detected and digital measurement data are generated via digital sensors and/or via analogue sensors with an analogue-to-digital converter connected downstream.

13. Movable component according to any of claims 11 or 12, wherein the digital reproduction and/or transmission unit is supplied with electrical energy by utilising movements of the movable component and/or by utilising the energy of a fluid conducted through the movable component.

14. Movable component according to at least one of claims 11 to 13, wherein the reproduction and/or transmission unit comprises a transmitter for wireless transmission of measurement data, which transmitter is arranged on the movable component or in the immediate vicinity of the movable component.

## Revendications

1. Composant déplaçable en métal pour compenser des mouvements in situ d'une conduite de fluides, en particulier d'une tuyauterie de guidage de fluide, dans lequel le composant déplaçable peut être déplacé en particulier sur une longueur variable et/ou angulairement et/ou axialement et/ou latéralement, dans lequel un élément d'information (6, 7) lisible numériquement est fixé au composant déplaçable, **caractérisé en ce que** l'élément d'information lisible (6, 7) est doté d'une mémoire numérique lisible de l'extérieur, en particulier au moyen d'une communication en champ proche, et dans lequel la mémoire numérique de l'élément d'information lisible (6, 7) est inscriptible de l'extérieur, en particulier au moyen d'une communication en champ proche.

2. Composant déplaçable selon la revendication 1, dans lequel le composant déplaçable est une suspension déplaçable sur une longueur variable et/ou angulairement et/ou axialement et/ou latéralement, ou un support déplaçable sur une longueur variable et/ou angulairement et/ou axialement et/ou latéralement pour la tuyauterie de guidage de fluide.

3. Composant déplaçable selon la revendication 1, dans lequel le composant déplaçable est un élément de conduite flexible (1) pour le montage dans la tuyauterie de guidage de fluide et présente un tube métallique (2) avec au moins une section ondulée ou ondulée en hélice et/ou avec au moins une section enroulée en hélice et/ou avec au moins une section formée de segments individuels déplaçables les uns par rapport aux autres, ainsi qu'avec des pièces de raccordement (3) et/ou des brides des deux côtés pour le montage dans la tuyauterie.

4. Composant déplaçable selon la revendication 3, dans lequel l'élément de conduite flexible (1) est un compensateur pour le montage dans une tuyauterie de guidage de fluide.

5. Composant déplaçable selon au moins une quelconque des revendications 1 à 4, dans lequel la mémoire numérique de l'élément d'information lisible (6, 7) comprend un fichier journal.

6. Composant déplaçable selon au moins une quelconque des revendications 1 à 5, dans lequel l'élément d'information lisible (6, 7) est doté d'une unité d'émission ou d'une unité d'émission et de réception pour la transmission sans fil d'informations.

7. Composant déplaçable selon au moins une quelconque des revendications 1 à 6, dans lequel l'élément d'information lisible (6, 7) peut être alimenté en énergie électrique sans fil par une unité de lecture (8).

8. Composant déplaçable selon au moins une quelconque des revendications 1 à 7, dans lequel l'élément d'information lisible (6, 7) est sensiblement une puce RFID.

9. Composant déplaçable selon au moins une quelconque des revendications 1 à 8, dans lequel l'élément d'information lisible numériquement contient un code lisible avec lequel des informations supplémentaires peuvent être demandées à un serveur Web.

10. Composant déplaçable selon au moins une quelconque des revendications 1 à 9, dans lequel l'élément d'information lisible (6, 7) est alimenté en énergie électrique en utilisant des mouvements du composant déplaçable et/ou en utilisant l'énergie d'un fluide traversant le composant déplaçable et/ou en utilisant de l'énergie thermique due aux différences de température au niveau du composant déplaçable.

11. Composant déplaçable selon au moins une quelconque des revendications 1 à 10, dans lequel le composant déplaçable est doté d'éléments de mesure qui sont connectés à l'élément d'information lisible (6, 7) et fournissent des données de mesure sur les paramètres de fonctionnement du composant déplaçable à l'élément d'information lisible (6, 7).

12. Composant déplaçable selon la revendication 11, dans lequel le composant déplaçable présente un dispositif de mesure pour une valeur instantanée d'un paramètre d'état d'un état de fonctionnement instantané du composant déplaçable, qui consiste sensiblement en une unité de reproduction et/ou de transmission numérique pour des données de mesure détectées numériquement de paramètres d'état, dans lequel une détection des paramètres d'état et la génération de données de mesure numériques sont effectuées par des capteurs numériques et/ou par des capteurs analogiques avec convertisseur analogique-numérique en aval.

13. Composant déplaçable selon l'une quelconque des revendications 11 ou 12, dans lequel l'unité de reproduction et/ou de transmission numérique est alimentée en énergie électrique en utilisant des mouvements du composant déplaçable et/ou en utilisant l'énergie d'un fluide traversant le composant déplaçable.

14. Composant déplaçable selon au moins une quelconque des revendications 11 à 13, dans lequel l'unité de reproduction et/ou de transmission comprend un émetteur pour la transmission sans fil de données de mesure, qui est disposé sur le composant déplaçable ou à proximité immédiate du composant déplaçable.
